# EUROPÄISCHE PATENTSCHRIFT

(11) **EP 3 339 064 B1**
(45) Veröffentlichungstag und Bekanntmachung des Hinweises auf die Patenterteilung: **05.02.2020**
(21) Anmeldenummer: 17205662.4
(22) Anmeldetag: 06.12.2017
(51) Int. Cl.: B60C 27/08, B60C 27/02, B29C 65/00, B29C 65/06, B29C 65/64, B29L 31/12, B23K 101/30, B23K 20/12

(54) **KETTENGLIED MIT REIBVERSCHWEISSTEM TRAKTIONSELEMENT, VERFAHREN ZU SEINER HERSTELLUNG UND GLEITSCHUTZ- ODER REIFENSCHUTZVORRICHTUNG MIT EINEM SOLCHEN KETTENGLIED**
CHAIN LINK WITH FRICTION WELDED TRACTION ELEMENT, METHOD FOR ITS PREPARATION AND SLIDING PREVENTION OR TYRE PROTECTION DEVICE WITH SUCH A CHAIN LINK
MAILLON DE CHAÎNE POURVU D'ÉLÉMENT DE TRACTION SOUDÉ PAR FRICTION, SON PROCÉDÉ DE FABRICATION ET DISPOSITIF ANTIDÉRAPANT OU DE PROTECTION DE PNEUMATIQUES DOTÉ D'UN TEL MAILLON DE CHAÎNE

(30) Priorität: 22.12.2016 DE 102016226049
(43) Veröffentlichungstag der Anmeldung: 27.06.2018
(73) Patentinhaber: RUD Ketten Rieger & Dietz GmbH u. Co. KG, 73432 Aalen (DE)
(72) Erfinder: Schmidtke, Werner, 89174 Altheim (DE)
(74) Vertreter: Grünecker Patent- und Rechtsanwälte PartG mbB

(56) Entgegenhaltungen:
- WO-A1-2009/080289

## Beschreibung

Die Erfindung betrifft ein Kettenglied für eine Gleitschutz- oder Reifenschutzvorrichtung, das einen Kettengliedkörper und wenigstens ein auf den Kettengliedkörper aufgeschweißtes, vom Kettengliedkörper abstehendes Traktionselement aufweist. Ferner betrifft die Erfindung eine Gleitschutz- oder Reifenschutzvorrichtung für einen Fahrzeugreifen, mit wenigstens einem Kettenstrang, der bei montierter Gleitschutz- oder Reifenschutzvorrichtung auf einer Lauffläche des Reifens aufliegt. Schließlich betrifft die Erfindung ein Verfahren zum Herstellen eines Kettengliedes für eine Gleitschutz- oder Reifenschutzvorrichtung.

Gleitschutzvorrichtungen, beispielsweise Schnee- oder Forstketten, sollen die Traktion des Fahrzeugreifens auf rutschigem Untergrund wie Schlamm, Matsch, Schnee oder Eis verbessern. Reifenschutzketten dienen dazu, die Reifenkarkasse zu schützen, wobei auch hier auf eine ausreichende Traktion geachtet werden muss.

Zur Erhöhung der Traktion von Gleitschutz- oder Reifenschutzvorrichtungen ist es bekannt, ein Traktionselement auf den Kettengliedkörper aufzuschweißen. Das Traktionselement steht vom Kettengliedkörper ab und gräbt sich in den Untergrund ein. Ein derartiges Kettenglied ist beispielsweise in der DE 20 2009 015 608 U1 beschrieben.

Die Herstellung des in dieser Druckschrift dargestellten Kettengliedes mit den Greifbolzen ist aufwändig.

Der Erfindung liegt daher die Aufgabe zugrunde, ein Kettenglied für eine Reifenschutz- oder Gleitschutzvorrichtung sowie ein Verfahren zu seiner Herstellung zu schaffen, das mit weniger Aufwand verbunden ist.

In der WO 2009/080289 A1 ist ein Verfahren zur Herstellung geschweißter Rund- und Profilketten aus miteinander verbundenen Kettengliedern gezeigt. Diese werden jeweils aus zwei Kettenglied-Teilstücken hergestellt, die miteinander durch Reibschweißen, beispielsweise Linearreibschweißen oder Orbitalreibschweißen verbunden werden. Ferner können diese durch einen sogenannten Friex-Prozeß mittels einer Scheibe oder Platte miteinander verschweißt werden, wobei sich die Platte oder Scheibe zwischen den Kettenglied-Teilstücken befindet.

Erfindungsgemäß wird diese Aufgabe für das eingangs genannte Kettenglied dadurch gelöst, dass das Traktionselement reibverschweißt ist. Für das eingangs genannte Verfahren wird diese Aufgabe erfindungsgemäß dadurch gelöst, dass auf einen Kettengliedkörper wenigstens ein Traktionselement mittels Reibverschweißen aufgebracht wird.

Das Reibverschweißen hat den Vorteil, dass es mit höherer Flexibilität als das bislang zur Anbringung der Traktionselemente auf dem Kettengliedkörper angewandte Widerstandsschweißen aufweist. Unterschiedlichste Stollenformen können mit Hilfe des Reibschweißverfahrens an den unterschiedlichsten Stellen des Kettengliedkörpers vollautomatisiert und ohne großen Energieaufwand angebracht werden. Da das Verschweißen ohne elektrischen Strom erfolgt, ist es sicherer durchzuführen. Außerdem ist der Wärmeeintrag lokal stark begrenzt.

Die Erfindung kann durch eine Reihe von jeweils für sich vorteilhaften und beliebig miteinander kombinierbaren Weiterbildungen nochmals verbessert werden.

So kann gemäß weiteren Ausgestaltungen das Traktionselement rotations-, orbital- oder linearreibverschweißt sein. Beim Rotationsreibschweißen wird das Traktionselement um seine eigene, senkrecht zur Schweißfläche verlaufende Achse gedreht. Beim Orbitalreibschweißen bewegt sich das Traktionselement bzw. dessen Achse auf einer Kreisbahn, wobei diese Orbitalbewegung auch von einer Rotationsbewegung des Traktionselements um seine eigene Achse überlagert sein kann. Beim Linearreibschweißen wird das Traktionselement translatorisch hin und her bewegt. Während dieser Bewegungen wird das Traktionselement gegen den Kettengliedkörper gedrückt, so dass eine lokal hohe Reibungswärme erzeugt wird. Ist die Temperatur an den aufeinanderreibenden Flächen von Traktionselement und Kettengliedkörper ausreichend hoch, wird die Bewegung gestoppt und der Anpressdruck erhöht, so dass Traktionselement und Kettengliedkörper verschweißen.

Das Traktionselement kann insbesondere stollenförmig sein bzw. eine prismatische Grundform aufweisen, wobei bevorzugt eine Grundfläche des Prismas mit dem Kettengliedkörper verschweißt ist.

Insbesondere bei einem rotations- oder orbitalverschweißten Traktionselement bietet es sich an, das Traktionselement mit einem rotationssymmetrischen Querschnitt bzw. einer rotationssymmetrischen, die Schweißfläche bildenden Grundfläche auszugestalten. Insbesondere bei einer eckenfreien Ausgestaltung der Grundfläche, insbesondere einer kreisförmigen Grundfläche, vereinfacht sich der Verschweißvorgang gegenüber einer polygonalen Grundfläche mit Kanten, die sich im Zuge des Reibschweißverfahrens leicht verformen können.

Das Traktionselement kann aus einem anderen, insbesondere härterem Werkstoff als der Kettengliedkörper gefertigt sein, um hohe Standzeiten zu erreichen.

Der Kettengliedkörper selbst kann aus zwei miteinander reibverschweißten Teilen zusammengefügt sein.

Wie beim Stollen auch, ermöglicht das Reibschweißverfahren die Paarung unterschiedlicher Werkstoffe. So kann beispielsweise das eine Teil aus einem härteren Material bestehen als der andere Teil.

Die Fertigung des Kettengliedes kann sich vereinfachen, wenn das Traktionselement vor dem Zusammenfügen der beiden Teile des Kettengliedkörpers aufgeschweißt wird. Insbesondere hier ist der stark lokalisierte Wärmeeintrag beim Reibschweißen von Vorteil, da sich die Reibverschweißung des Kettengliedkörpers nicht auf das Taktionselement bzw. seine Verbindung mit dem Kettengliedgrundkörper auswirkt.

Der Kettengliedkörper kann gemäß einer weiteren Ausgestaltung zwei durch Buge miteinander verbundene Schenkel aufweisen, wobei einer der Schenkel gegenüber dem anderen Schenkel verstärkt ausgestaltet ist und der verstärkte Schenkel das Traktionselement trägt. Der verstärkte Schenkel bildet einen Verschleißabschnitt, der durch die Benutzung der Reifenschutz- oder Gleitschutzvorrichtung stetig abgetragen wird. Das eine der zum Kettengliedkörper zusammengefügten Teile kann den verdickten Schenkel aufweisen bzw. aus dem verdickten Schenkel bestehen.

Die Erfindung ist im Folgenden anhand von Ausführungsbeispielen exemplarisch näher erläutert. In den Zeichnungen werden für Elemente, die einander hinsichtlich Funktion und/oder Aufbau entsprechen, dieselben Bezugszeichen verwendet.

Nach Maßgabe der obigen Ausführungen können die bei den Ausführungsbeispielen unterschiedlichen Merkmale beliebig miteinander kombiniert werden. So kann beispielsweise auf ein Merkmal eines Ausführungsbeispiels verzichtet werden, wenn dieses Merkmal keinen technischen Effekt aufweist, der einen Vorteil bei einer bestimmten Anwendung verspricht. Umgekehrt kann einem Ausführungsbeispiel ein Merkmal von einem anderen Ausführungsbeispiel hinzugefügt werden, wenn es auf dieses Merkmal ankommt.

Es zeigen:
- Fig. 1: eine schematische Seitenansicht einer auf einem Fahrzeugreifen montierten Reifenschutz- oder Gleitschutzvorrichtung;
- Fig. 2: eine schematische Perspektivdarstellung einer ersten Ausgestaltung eines erfindungsgemäßen Kettenglieds für eine Reifenschutz- oder Gleitschutzvorrichtung;
- Fig. 3: eine schematische Perspektivdarstellung eines weiteren Ausführungsbeispiels eines erfindungsgemäßen Kettenglieds;
- Fig. 4: eine schematische Perspektivdarstellung eines weiteren Ausführungsbeispiels eines erfindungsgemäßen Kettenglieds;
- Fig. 5: eine schematische Perspektivdarstellung eines weiteren Ausführungsbeispiels eines Kettenglieds.

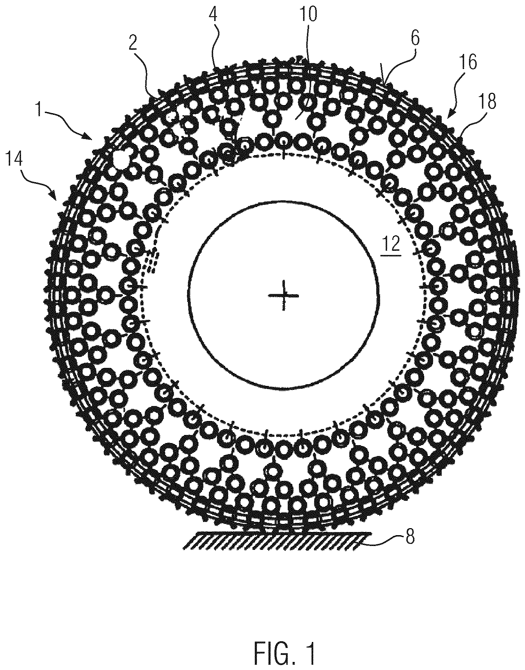

Fig. 1 zeigt beispielhaft eine Reifenschutz- oder Gleitschutzvorrichtung 1, die auf einem Fahrzeugreifen 2 montiert ist, wobei wenigstens einige Kettenstränge 4 auf einer Lauffläche 6 des Fahrzeugreifens 2 zu liegen kommen. Die Lauffläche 6 rollt auf einem Untergrund 8 ab, so dass sich die Kettenstränge 4 zwischen der Lauffläche 6 und dem Untergrund 8 befinden.

Damit die Reifen- oder Gleitschutzvorrichtung 1 nicht seitlich vom Fahrzeugreifen 2 abfallen kann, erstreckt sie sich über eine Reifenflanke 10 sowohl auf der hier sichtbaren Außenseite 12 des Fahrzeugreifens als auch auf der einer Fahrzeugkarosserie (nicht dargestellt) zugewandten, in Fig. 1 nicht dargestellten Innenseite 14 des Fahrzeugreifens 2.

Die Kettenstränge 4 weisen Kettenglieder 16 auf, die mit Traktionselementen 18 versehen sind.

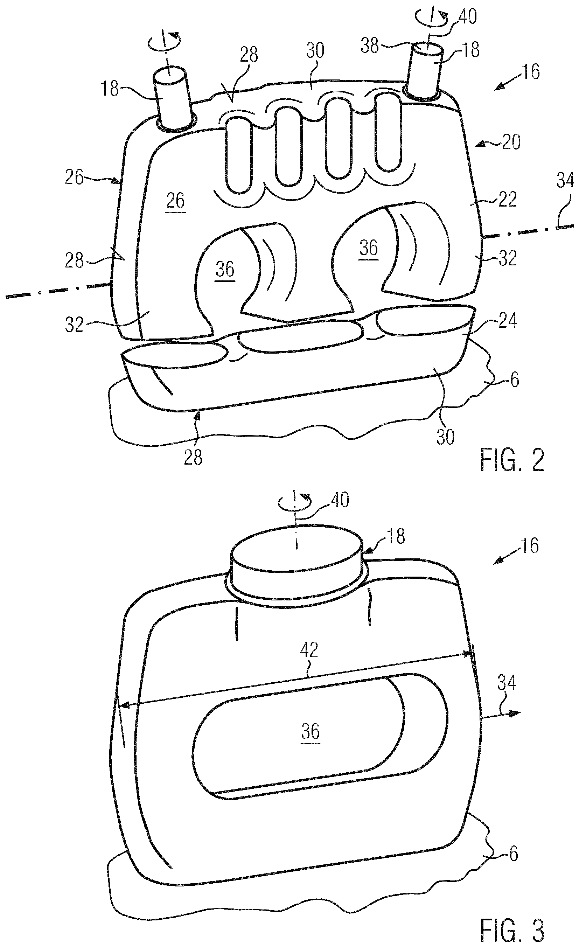

Verschiedene beispielhafte Ausführungen der Kettenglieder 16, die gemeinsam oder alternativ in einer Reifen- oder Gleitschutzvorrichtung 1 bzw. einem Kettenstrang 4 verwendet werden können, sind im Folgenden mit Bezug auf die Figuren 2 bis 5 näher beschrieben.

Fig. 2 zeigt ein einzelnes Kettenglied 16 eines Kettenstranges 4 (Fig. 1). Das Kettenglied 16 weist einen Kettengliedkörper 20 auf, der aus zwei oder mehr Teilen 22, 24 insbesondere durch Reibverschweißen monolithisch zusammengefügt sein kann. Bevorzugt sind die Teile 22, 24 durch Orbital- oder Rotationsreibverschweißen stoffschlüssig zusammengefügt.

Der Kettengliedkörper 20 ist ein Flachkörper mit zwei sich gegenüberliegenden Flachseiten 26, die über Schmalseiten 28 des Kettengliedkörpers 20 miteinander verbunden sind.

Das Kettenglied 16 ist in der dargestellten Ausgestaltung ein stehendes Kettenglied des Kettenstranges 4. Dies bedeutet, dass das Kettenglied 16 bei montierter Reifen- oder Gleitschutzvorrichtung mit einer seiner Schmalseiten 28 auf der Lauffläche 6 des Fahrzeugreifens aufliegt und sich somit seine Flachseiten 26 im Wesentlichen senkrecht zur Lauffläche 6 erstrecken.

Die Schmalseiten 28 können von zwei im Wesentlichen geradlinigen Schenkeln 30 gebildet sein, wobei einer der Schenkel 30 auf der Lauffläche 6 aufliegen kann. Die Schenkel 30 sind durch mehr oder weniger gekrümmte Buge 32 des Kettengliedes miteinander verbunden, die ebenfalls Schmalseiten 28 bilden. Die Buge 32 weisen in Richtung einer Längserstreckung 34 des Kettenstranges 4, in der die Kettenglieder des Kettenstranges aufeinander folgen. Einer der Schenkel 30, und zwar bevorzugt der Schenkel 30 auf der von der Lauffläche abgewandten Seite des Kettengliedes 16, kann verdickt sein. An diesem Schenkel kann das wenigstens eine Traktionselement angebracht sein. Der verdickte Schenkel 30 befindet sich an dem einen Teil 22.

Die im Kettenstrang 4 zu dem dargestellten Kettenglied 16 benachbarten Kettenglieder (nicht gezeigt) werden in wenigstens eine Öffnung 36 des Kettengliedes 16 eingehängt.

Um die Traktionswirkung des Kettengliedes 16 zu erhöhen, ist es mit wenigstens einem Traktionselement 18 versehen. Lediglich zu Beispielzwecken sind in Fig. 2 zwei Traktionselemente gezeigt.

Das Traktionselement 18 ist bevorzugt stollenförmig und steht vom Kettenglied 16 insbesondere an dessen von der Lauffläche 6 weg weisenden Seite ab. Bei einem stehenden Kettenglied ist diese Seite eine Schmalseite 28.

Genauso gut kann jedoch ein liegendes Kettenglied mit wenigstens einem Traktionselement 18 versehen sein. Bei einem liegenden Kettenelement verlaufen die Flachseiten 26 im Wesentlichen parallel zur Lauffläche 6. Folglich kann bei einem liegenden Kettenglied 16 das wenigstens eine Traktionselement 18 an der von der Lauffläche 6 weg weisenden Flachseite 26 angebracht sein.

Erfindungsgemäß ist das Traktionselement 18 mit dem Kettengliedkörper 20 reibverschweißt.

Das Traktionselement 18 kann eine prismatische, insbesondere zylindrische Form mit zwei sich gegenüberliegenden Grundflächen 38 aufweisen, wobei eine der Grundflächen 38 mit dem Kettengliedkörper 20 verschweißt ist. Eine Längsachse 40 verbindet die beiden Grundflächen 38 des Traktionselements 18. Der Querschnitt des Traktionselements ist bevorzugt rotationssymmetrisch.

Bei einer Rotationsverschweißung wird das Traktionselement 18 um die Längsachse 40 gedreht und dabei gegen den Kettengliedkörper 20 gedrückt, so dass Reibungswärme entsteht. Durch die Reibungswärme erhitzt sich das Material des Kettengliedkörpers 20 und des Traktionselements 18 an den aneinanderreibenden Flächen so stark, dass das Material teigig wird und verschweißt, sobald es im teigigen Zustand bei angehaltener Bewegung aneinandergepresst wird. Auch eine Orbitalverschweißung ist möglich, bei der die Längsachse 40 entlang einer Kreisbahn geführt wird. Zusätzlich kann diese Orbitalbewegung mit einer Rotation des Traktionselements 18 um seine Längsachse 40 verbunden sein. Schließlich ist auch eine Linearreibverschweißung möglich, bei der die Längsachse 40 des Traktionselements 18 translatorisch hin und her bewegt wird. Die Reibverschweißung ermöglicht insbesondere auch die Paarung von ansonsten nur schwer stoffschlüssig miteinander verbindbaren Werkstoffen, wie beispielsweise Kunststoffen und Metallen sowie Metallen stark unterschiedlicher Härte oder Zusammensetzung.

Das Traktionselement 18 kann entsprechend aus einem anderen Werkstoff, beispielsweise einer anderen Legierung als der Kettengliedkörper 20 hergestellt sein. Insbesondere ist das Traktionselement 18 härter als der Kettengliedkörper 20.

Das Traktionselement 18 kann bei einem mehrteiligen Kettengliedkörper 24 vormontiert sein, also bereits auf beispielsweise dem Teil 22 aufgebracht sein, bevor dieses mit dem Teil 24 zusammengefügt wird.

Die Größe, Form und Anzahl der Traktionselemente 18 sowie des Kettengliedes 16 kann variieren, wie aus den nachstehend beschriebenen Ausführungsbeispielen der Figuren 3 bis 5 hervorgeht. Der Kürze halber wird im Zusammenhang mit diesen Ausführungsbeispielen jeweils nur auf die Unterschiede zu den vorangegangenen Ausführungsbeispielen eingegangen.

Fig. 3 zeigt beispielsweise ein Kettenglied 16 mit einem einzelnen Traktionselement 18, das sich über mehr als die Hälfte einer Länge 42 des Kettengliedes 16 in der Richtung 34 erstreckt. Das Traktionselement 18 kann senkrecht zur Richtung 34 eine geringere Abmessung aufweisen als in Richtung 34, so dass es selbst langgestreckt ist.

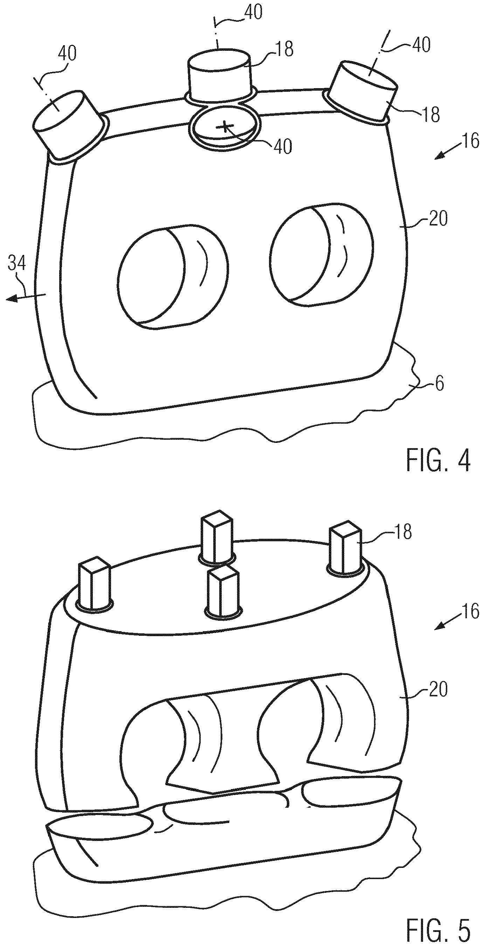

Gemäß Fig. 4 muss das Traktionselement 18 nicht, wie bei den Ausführungsbeispielen der Fig. 2 und 3 senkrecht oder nahezu senkrecht von der Lauffläche 6 abstehen, sondern kann auch deutlich, zwischen 30° und 60° mit seiner Längsachse 40 gegenüber der Lauffläche 6 bzw. der das Traktionselement 18 tragenden Schmalseite 28 oder Flachseite 26 geneigt sein. Die Neigung kann in Richtung 34 und/oder quer hierzu verlaufen.

Gemäß Fig. 5 können auch quaderförmige Traktionselemente 18 mit dem Kettengliedkörper 20 reibverschweißt sein, wobei die Grundfläche der Traktionselemente 18 beliebig polygonal sein kann.

Weitere Abwandlungen sind möglich. So kann das Traktionselement am Übergang zwischen einer Schmalseite 28 und einer Flachseite 26 angebracht sein.

### Bezugszeichen

- 1: Reifen- oder Gleitschutzvorrichtung
- 2: Fahrzeugreifen
- 4: Kettenstrang
- 6: Lauffläche
- 8: Untergrund
- 10: Reifenflanke
- 12: Außenseite
- 14: Innenseite
- 16: Kettenglied
- 18: Traktionselement
- 20: Kettengliedkörper
- 22: Teil des Kettengliedkörpers
- 24: Teil des Kettengliedkörpers
- 26: Flachseite
- 28: Schmalseite
- 30: Schenkel
- 32: Bug
- 34: Längserstreckung
- 36: Öffnung
- 38: Grundfläche des Traktionselements
- 40: Längsachse des Traktionselements
- 42: Länge des Kettenglieds

## Patentansprüche

1. Kettenglied (16) für eine Gleitschutz- oder Reifenschutzvorrichtung (1), das einen Kettengliedkörper (20) und wenigstens eine auf den Kettengliedkörper (20) aufgeschweißtes, vom Kettengliedkörper (20) abstehendes Traktionselement (18) aufweist, **dadurch gekennzeichnet, dass** das Traktionselement (18) reibverschweißt ist.

2. Kettenglied (16) nach Anspruch 1, **dadurch gekennzeichnet, dass** das Traktionselement (18) rotationsreibverschweißt ist.

3. Kettenglied (16) nach Anspruch 1, **dadurch gekennzeichnet, dass** das Traktionselement linearreibverschweißt ist.

4. Kettenglied (16) nach Anspruch 1, **dadurch gekennzeichnet, dass** das Traktionselement (18) orbitalreibverschweißt ist.

5. Kettenglied (16) nach einem der Ansprüche 1 bis 4, **dadurch gekennzeichnet, dass** der Kettengliedkörper (20) aus wenigstens zwei miteinander reibverschweißten Teilen (22, 24) zusammengefügt ist.

6. Kettenglied (16) nach einem der Ansprüche 1 bis 5, **dadurch gekennzeichnet, dass** das wenigstens eine Traktionselement (18) einen rotationssymmetrischen Querschnitt aufweist.

7. Kettenglied (16) nach einem der Ansprüche 1 bis 6, **dadurch gekennzeichnet, dass** der Kettengliedkörper (20) zwei durch Buge (32) miteinander verbundene Schenkel (30) aufweist, wobei einer der Schenkel (30) gegenüber dem anderen Schenkel (30) verstärkt ausgestaltet ist und das wenigstens eine Traktionselement (18) trägt.

8. Kettenglied (16) nach Anspruch 7, **dadurch gekennzeichnet, dass** der verdickte Schenkel (30) mit dem übrigen Kettengliedkörper (20) stoffschlüssig zusammengefügt ist.

9. Kettenglied (16) nach einem der Ansprüche 1 bis 8, **dadurch gekennzeichnet, dass** das Traktionselement (18) stollenförmig ist.

10. Gleitschutz- oder Reifenschutzvorrichtung (1) für einen Fahrzeugreifen (2), mit wenigstens einem Kettenstrang (4), der bei montierter Gleitschutz- oder Reifenschutzvorrichtung (1) auf einer Lauffläche (6) des Fahrzeugreifens (2) aufliegt, **dadurch gekennzeichnet, dass** der Kettenstrang (4) wenigstens ein Kettenglied (16) nach einem der Ansprüche 1 bis 9 aufweist.

11. Verfahren zum Herstellen eines Kettengliedes (16) für eine Gleitschutz- oder Reifenschutzvorrichtung (1), **dadurch gekennzeichnet, dass** auf einen Kettengliedkörper (20) des Kettengliedes (16) wenigstens ein Traktionselement (18) vom Kettengliedkörper (20) abstehend mittels Reibverschweißen aufgebracht wird.

12. Verfahren nach Anspruch 11, **dadurch gekennzeichnet, dass** der Kettengliedkörper (20) aus wenigstens zwei Teilen (22, 24) mittels Reibverschweißen zusammengefügt wird.

13. Verfahren nach Anspruch 12, **dadurch gekennzeichnet, dass** das Traktionselement (18) vor dem Zusammenfügen des Kettengliedkörpers (20) auf eines der Teile (22, 24) des Kettengliedkörpers (20) aufgebracht wird.

## Claims

1. Chain link (16) for an anti-skid or tyre protection device (1) comprising a chain link body (20) and at least one traction element (18) which is welded onto the chain link body (20) and protrudes from the chain link body (20), **characterised in that** the traction element (18) is friction-welded.

2. Chain link (16) according to claim 1, **characterised in that** the traction element (18) is rotationally friction-welded.

3. Chain link (16) according to claim 1, **characterised in that** the traction element is linearly friction-welded.

4. Chain link (16) according to claim 1, **characterised in that** the traction element (18) is orbitally friction-welded.

5. Chain link (16) according to any of claims 1 to 4, **characterised in that** the chain link body (20) is assembled from at least two parts (22, 24) which are friction-welded together.

6. Chain link (16) according to any of claims 1 to 5, **characterised in that** the at least one traction element (18) has a rotationally symmetrical cross section.

7. Chain link (16) according to any of claims 1 to 6, **characterised in that** the chain link body (20) has two legs (30) that are interconnected by bows (32), one of the legs (30) being reinforced relative to the other leg (30) and bearing at least one traction element (18).

8. Chain link (16) according to claim 7, **characterised in that** the thickened leg (30) is integrally assembled with the rest of the chain link body (20).

9. Chain link (16) according to any of claims 1 to 8, **characterised in that** the traction element (18) is stud-shaped.

10. Anti-skid or tyre protection device (1) for a vehicle tyre (2), having at least one chain strand (4) which rests on a tread (6) of the vehicle tyre (2) when the anti-skid or tyre protection device (1) is mounted, **characterised in that** the chain strand (4) has at least one chain link (16) according to any of claims 1 to 9.

11. Method for producing a chain link (16) for an anti-skid or tyre protection device (1), **characterised in that** at least one traction element (18) is attached to a chain link body (20) of the chain link (16) so as to protrude from the chain link body (20) by means of friction-welding.

12. Method according to claim 11, **characterised in that** the chain link body (20) is assembled from at least two parts (22, 24) by means of friction-welding.

13. Method according to claim 12, **characterised in that** the traction element (18) is attached to one of the parts (22, 24) of the chain link body (20) prior to assembly of the chain link body (20).

## Revendications

1. Maillon de chaine (16) pour un dispositif antidérapant ou de protection de pneumatique (1), qui comprend un corps de maillon de chaine (20) et au moins un élément de traction (18) soudé sur le corps de maillon de chaine (20) et faisant saillie du corps de maillon de chaine (20), **caractérisé en ce que** l'élément de traction (18) est soudé par friction.

2. Maillon de chaine (16) selon la revendication 1, **caractérisé en ce que** l'élément de traction (18) est soudé par friction de rotation.

3. Maillon de chaine (16) selon la revendication 1, **caractérisé en ce que** l'élément de traction est soudé par friction de déplacement linéaire.

4. Maillon de chaine (16) selon la revendication 1, **caractérisé en ce que** l'élément de traction (18) est soudé par friction de déplacement orbital.

5. Maillon de chaine (16) selon l'une des revendications 1 à 4, **caractérisé en ce que** le corps de maillon de chaine (20) est formé par l'assemblage d'au moins deux parties (22, 24) soudées l'une à l'autre.

6. Maillon de chaine (16) selon l'une des revendications 1 à 5, **caractérisé en ce que** ledit au moins un élément de traction (18) présente une section transversale à symétrie de rotation.

7. Maillon de chaine (16) selon l'une des revendications 1 à 6, **caractérisé en ce que** le corps de maillon de chaine (20) présente deux branches (30) reliées l'une à l'autre par l'intermédiaire de bras de liaison (32), l'une des branches (30) étant d'une configuration renforcée par rapport à l'autre branche (30) et portant ledit au moins un élément de traction (18) .

8. Maillon de chaine (16) selon la revendication 7, **caractérisé en ce que** la branche (30) plus épaisse est assemblée au reste du corps de maillon de chaine (20) par une liaison à continuité de matière.

9. Maillon de chaine (16) selon l'une des revendications 1 à 8, **caractérisé en ce que** l'élément de traction (18) présente une forme de crampon.

10. Dispositif antidérapant ou de protection de pneumatique (1) pour un pneumatique de véhicule (2), comprenant au moins un brin de chaine (4), qui, lorsque le dispositif antidérapant ou de protection de pneumatique (1) est monté, repose sur une surface de roulement (6) d'un pneumatique de véhicule (2), **caractérisé en ce que** le brin de chaine (4) comprend au moins un maillon de chaine (16) selon l'une des revendications 1 à 9.

11. Procédé de fabrication d'un maillon de chaine (16) pour un dispositif antidérapant ou de protection de pneumatique (1), **caractérisé en ce que** l'on rapporte sur un corps de maillon de chaine (20) du maillon de chaine (16), moyennant soudage par friction, au moins un élément de traction (18) faisant saillie du corps de maillon de chaine (20).

12. Procédé selon la revendication 11, **caractérisé en ce que** le corps de maillon de chaine (20) est constitué d'au moins deux parties (22, 24) que l'on assemble par soudage par friction.

13. Procédé selon la revendication 12, **caractérisé en ce que** l'élément de traction (18) est rapporté, avant l'assemblage du corps de maillon de chaine (20), sur l'une des parties (22, 24) du corps de maillon de chaine (20) .
